Europäisches Patentamt

European Patent Office

Office européen des brevets

(19)

(11) EP 0 626 740 B1

(12) ## FASCICULE DE BREVET EUROPEEN

(45) Date de publication et mention
de la délivrance du brevet:
**17.12.1997 Bulletin 1997/51**

(51) Int Cl.6: **H01S 3/00**, G02B 5/18

(21) Numéro de dépôt: **94401001.6**

(22) Date de dépôt: **06.05.1994**

(54) **Ligne à retard optique dispersive et son utilisation pour la compression/extension d'impulsions laser**

Optische Dispersionsverzögerungsleitung und ihre Verwendung zum Verkürzen/Dehnen von Laserimpulsen

Optical dispersive delay line and its use for laser pulse compression/expansion

(84) Etats contractants désignés:
**DE FR GB IT NL**

(30) Priorité: **18.05.1993 FR 9305989**

(43) Date de publication de la demande:
**30.11.1994 Bulletin 1994/48**

(73) Titulaire: **THOMSON-CSF
75008 Paris (FR)**

(72) Inventeur: **Tournois, Pierre
F-92402 Courbevoie Cédex (FR)**

(74) Mandataire: **Lincot, Georges et al
THOMSON-CSF-S.C.P.I.,
13, Avenue du Président
Salvador Allende
94117 Arcueil Cédex (FR)**

(56) Documents cités:
- **IEEE JOURNAL OF QUANTUM ELECTRONICS., vol.QE-5, no.9, Septembre 1969, NEW YORK US pages 454 - 458 E.B.TREACY 'Optical pulse compression with diffraction gratings'**
- **ELECTRONICS LETTERS., vol.29, no.16, 5 Août 1993, ENAGE GB pages 1414 - 1415 P.TOURNOIS 'New diffraction grating pair with very linear dispersion for laser pulse compression'**

# Description

L'invention se rapporte au domaine de la compression d'impulsions d'ondes lumineuses, et plus particulièrement de la compression d'impulsions émises par les sources laser.

La compression/extension d'impulsions laser peut s'appliquer dans divers domaines.

Par exemple dans le domaine de la physique fondamentale, la possibilité d'obtenir des puissances très élevées à partir d'un laser basse fréquence permet d'extraire des noyaux atomiques de leur environnement électronique. La chaîne de traitement des impulsions laser fournit des densités de puissance supérieures à $10^{18}$W/cm$^2$. La technique utilisée consiste, schématiquement, d'abord à allonger la durée de l'impulsion laser de l'ordre de la nanoseconde (par exemple par dispersion dans une fibre optique de matériau non-linéaire), puis à moduler le signal obtenu et à amplifier le signal ainsi modulé (par exemple par pompage d'un laser YAG/Nd$^{3+}$). Les amplifications de l'ordre de quelques dizaines de joules (jusqu'au KJ) peuvent être obtenues. Le signal étendu et amplifié est alors comprimé à travers des réseaux de diffraction lorsqu'il est au maximum de sa puissance crête. Sa puissance est alors multipliée par le taux de compression. Cette technique permet d'obtenir des puissances de l'ordre de quelques petawatts.

Une autre application concerne la prise de vue ultra rapide à très haute cadence, destinée par exemple à l'analyse des interactions moléculaires. Le problème est de pouvoir disposer d'impulsions laser de durée extrêmement brèves. Lorsqu'une impulsion laser est modulée sur une bande de fréquence $\Delta f$ de largeur très étendue, sa compression fournit une impulsion de durée égale à $1/\Delta f$ particulièrement courte.

Il est par exemple possible, par l'utilisation d'une ligne à retard adaptée, d'obtenir des durées d'impulsions de l'ordre de quelques femtosecondes, comptabiles avec une telle application.

D'autre part, une autre application possible vise la détection de cibles par réception d'impulsions modulées émises par des sources laser. Ce type de détection est par exemple utilisé dans les lidars (initiales de "Light Detection and Ranging" en terminologie anglo-saxonne) ou dans les systèmes d'imagerie actifs. A l'émission, les impulsions laser de durée T sont modulées en fréquence afin d'obtenir une bonne détection de toute cible. A la réception, le système de détection est équipé d'un filtre de compression d'impulsions qui permet de comprimer temporairement le signal utile reçu selon le taux de compression à $T.\Delta f$. L'impulsion est alors démodulée en fréquences et le filtre délivre alors toutes les fréquences de l'impulsion. Une analyse de ces fréquences fournit un signal de détection de cible.

Le filtre de compression constitue, dans ces applications, une ligne à retard dispersive dont le temps de propagation dit de retard décroît (filtre descendant) ou croît (filtre montant) avec la fréquence. Par exemple un filtre descendant (le plus répandu) retarde les fréquences plus basses de la bande, les fréquences élevées rattrapant alors les fréquences basses pour donner une impulsion de durée comprimée égale à $1/\Delta f$. Dans ces conditions idéales, l'impulsion est raccourcie au maximum. Malheureusement, avec les lignes à retard optiques dispersives existantes, les performances de la compression sont très limitées, en particulier pour des bandes de fréquences de modulation $\Delta f$ importantes ou pour des durées d'imlpulsions T élevées. Il en est ainsi de la ligne à retard la plus connue, celle conçue par Edmond B. Treacy, telle que décrite par exemple dans l'article de IEEE intitulé "Optical Pulse Compression with Diffraction Gratings", volume QE-5, Septembre 1969, pages 454 à 458. Cette ligne à retard est constituée d'une paire de réseaux parallèles gravées sur deux lames séparées à faces parallèles. Les réseaux de diffraction sont utilisés par réflexion et les valeurs de l'angle d'incidence sont déterminées en conséquence. Une onde incidente est alors diffractée deux fois par une double réflexion sur les réseaux.

Les limites des lignes à retard optique existantes sont dues au fait qu'avec de telles lignes à retard, la variation du temps de retard en fonction de la fréquence n'est pas linéaire avec cette fréquence.

Pour des bandes spectrales $\Delta f$ importantes ou pour des durées d'impulsion T élevées, la linéarité de dispersion est très limitée, ce qui restreint sensiblement les performances de la compression d'impulsions laser.

L'invention vise au contraire à réaliser une ligne à retard optique dispersive performante, avec laquelle une variation importante du temps de retard en fonction de la fréquence est quasi-linéaire sur toute la largeur de la bande de modulation en fréquence correspondante. En particulier, l'erreur de linéarité peut être rendue inférieure à une valeur prédéterminée sur une largeur de bande importante et/ou pour une durée d'impulsion laser élevée.

L'invention est basée sur la constatation suivante : pour une ligne à retard optique comportant deux réseaux de diffraction parallèles utilisés par transmission, et lorsqu'une onde lumineuse tombe, sous un angle supérieur à l'angle de réfraction limite, sur un premier réseau gravé ou déposé sur un matériau transparent d'indice N, l'étude du temps de retard de l'impulsion émergente en fonction de la fréquence met en évidence l'existence d'un point d'inflexion pour une fréquence centrale $f_o$. Autour de ce point d'inflexion, la courbe présente alors une portion de bonne linéarité dans laquelle la largeur relative de la bande passante $\Delta f$ autour de $f_o$, la durée T de l'impulsion (égale à la variation de temps de retard dans la portion considérée), et donc le taux de compression $T.\Delta f$ se déduisent des choix des valeurs des caractéristiques des éléments de la ligne à retard optique utilisée.

Plus précisément, l'invention a pour objet une ligne à retard optique dispersive pour impulsions d'ondes lumineuses modulées autour d'une fréquence centrale $f_o$,

comportant un premier et un second réseaux optiques avec un pas a, parallèles séparés d'une distance d et localisés à la surface d'un matériau d'indice N transparent aux ondes lumineuses, la valeur de N fixant une valeur d'angle de réfraction limite, caractérisée en ce qu'une onde incidente est diffractée sous un angle θ' supérieur à l'angle de réfraction limite par transmission à travers le premier puis à travers le second réseau, l'angle d'incidence du premier et l'angle d'émergence du second réseau étant égal à θ', et en ce que les valeurs des paramètres N, θ', a et d sont choisies pour qu'une variation prédéterminée de temps de retard $\Delta t_R$ definie par $\Delta t_R = 4 \tan\theta_0 \, (\delta^*_m)^{1/2} \frac{d}{c}$, avec $\sin\theta_0 = \frac{1}{N\sin\theta'}$ et c étant la vitesse de la lumière dans le vide d'une impulsion, introduit par la double diffraction, corresponde à une valeur prédéterminée d'une largeur de bande de modulation $\Delta f$ definie par $\Delta f = 4 \sin\theta_0 \, (\delta^*_m)^{1/2} f_o$ autour de $f_o$, dans un domaine où la variation de temps de retard en fonction de la fréquence de l'impulsion laser ne s'écarte d'un segment de droite que d'une erreur de linéarité $\delta^*_m$ inférieure à une valeur prédéterminée.

Selon une caractéristique préférée, chaque réseau est localisé sur l'une des deux faces d'un prisme, les faces porteuses étant en regard l'une de l'autre. Les prismes ayant un angle au sommet égal à θ', l'onde lumineuse pénètre dans la ligne à retard normalement à la face sans réseau du premier prisme et émerge normalement par la face sans réseau du second.

L'invention concerne également l'utilisation de cette ligne à retard pour la compression/extension d'ondes laser dans les applications évoquées plus haut, en particulier pour des bandes de modulation $\Delta f$ d'étendues importantes, ou pour des durées d'impulsions élevées.

D'autres caractéristiques et avantages de l'invention apparaîtront à la lecture de la description qui suit, en regard des figures annexées qui représentent respectivement :

- la figure 1, un mode de réalisation de la ligne à retard selon l'invention ;
- la figure 2, l'allure des courbes de dispersion obtenues avec une ligne à retard selon l'invention ;
- la figure 3, un premier exemple de courbe de dispersion d'une impulsion laser traversant une ligne à retard selon l'invention de caractéristiques adaptées ;
- la figure 4, un deuxième exemple de courbe de dispersion correspondant à une ligne à retard selon l'invention ayant d'autres caactéristiques adaptées.

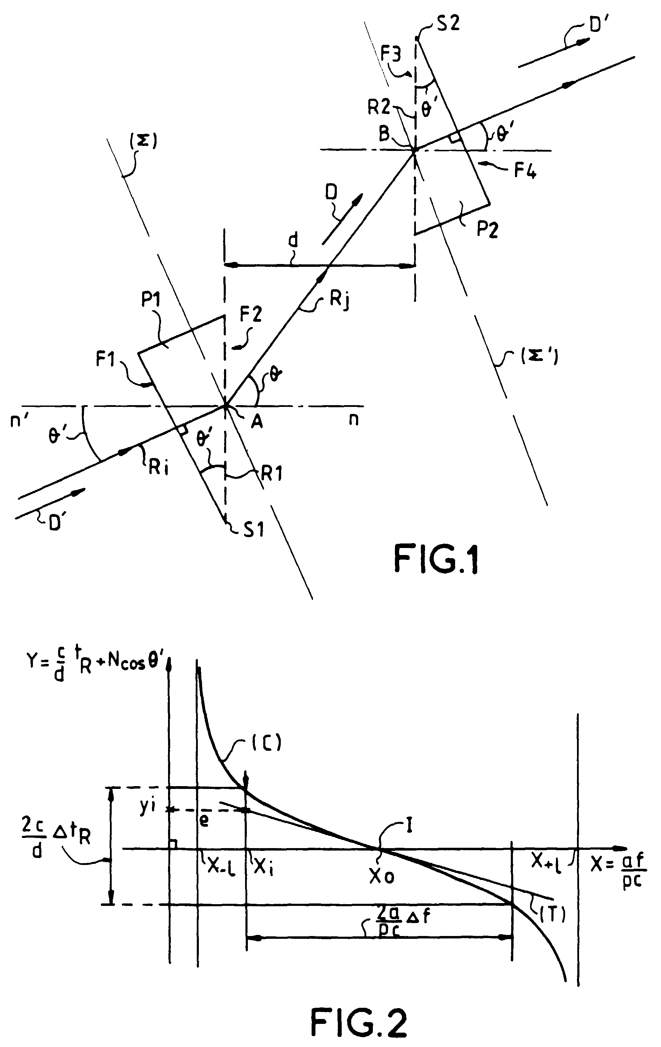

La figure 1 illustre un exemple de réalisation non limitatif d'une paire de réseaux dispersive constituant une ligne à retard optique selon l'invention. La figure montre deux réseaux optiques R1 et R2 parallèles, séparés entre eux d'une distance d. Les réseaux sont de même pas, a, gravés sur deux prismes, respectivement P1 et P2. Les prismes sont découpés dans un verre d'indice de réfraction N pour former les deux faces planes, respectivement F1, F2 et F3, F4, d'une dièdre de sommets S1 et S2. Une onde lumineuse plane incidente de front Σ est matérialisée sur la figure par un rayon incident $R_i$ qui rencontre le réseau R1 du prisme P1 en un point A. L'angle d'incidence θ' est défini par rapport à la normale n'n au réseau au point A.

Avantageusement la direction D' de l'onde incidente est normale à la première face F1 traversée par l'onde, si bien que l'onde n'est pas réfractée avant d'atteindre le réseau R1. L'angle θ' sous lequel l'onde incidente est diffractée est alors égal à l'angle au sommet S1 du prisme P1 formé entre ses faces F1 et F2.

Selon l'invention, l'angle θ' est supérieur à l'angle de réfraction limite, c'est-à-dire qu'il vérifie la relation :

$$\sin\theta' > \frac{1}{N} \qquad (1)$$

L'onde lumineuse incidente de direction D' est diffractée par le réseau R1 selon une onde lumienuse de direction D. En A, le rayon lumineux incident $R_i$ est alors diffractée, dans le vide ou dans l'air suivant le milieu utilisé entre les prismes, selon un angle θ par rapport à la normale n'n au réseau R1 en A. Selon la théorie classique des réseaux, les angles θ et θ' sont liés par la relation :

$$\sin\theta = N\sin\theta' - \frac{pc}{af} \qquad (2)$$

c étant la vitesse de la lumière dans le vide et p un entier positif adapté utilisé dans la théorie des réseaux.

Les réseaux utilisés sont formés de manière connue, en traçant par exemple des traits parallèles distants sur une couche mince d'aluminium déposée par évaporation sur les faces F2 et F3 des prismes P1 et P2. D'autres techniques existent (sérigraphie, gravure).

L'onde diffractée selon la direction D rencontre le second réseau R2 gravé sur la face F3 du prisme P2 en un point B. La seconde diffraction reconstitue une onde plane de front Σ' parallèle à Σ selon la direction D' de l'onde incidente Σ perpendiculairement à la face de sortie F4.

La double diffraction produite en A et B introduit un temps de retard différentiel $t_R$ par rapport à une simple propagation de l'onde Σ dans un verre d'indice N, séparant les fronts d'onde Σ au point A et Σ' au point B.

Si la relation (1) entre l'angle θ' et d'indice N est satisfaite, l'étude du temps de retard $t_R$ en fonction de la fréquence f de l'onde incidente montre que la courbe de dispersion représentative possède un point d'inflexion pour une fréquence $f_0$ telle que :

$$\frac{pc}{af_o} = N\sin\theta' - \frac{1}{N\sin\theta'} \qquad (3)$$

La fréquence $f_o$ correspond à un angle de diffraction $\theta_0$ qui a pour valeur, en rapprochant les relations (2) et (3) précédentes :

$$\sin\theta_0 = \frac{1}{N\sin\theta'}$$

Dans la pratique, il est commode de représenter une telle courbe de dispersion dans un plan orthonormé, en portant en ordonnée la quantité :

$$Y = \frac{c}{d} \cdot t_R + N\cos\theta'$$

et en abscisse la quantité

$$X = \frac{af}{pc}.$$

Il est alors intéressant de remarquer que l'allure de la courbe de dispersion obtenue, pour une valeur de $f_o$ donnée, ne dépend que des valeurs des paramètres $N\sin\theta'$, un pas a et de la distance d de la ligne à retard selon l'invention. En particulier, les caractéristiques d'excellente linéarité autour de son point d'inflexion (pente, étendue) sont exploitées par l'invention. Par un choix adapté de ces valeurs, il est alors possible de traiter une bande passante $\Delta f$ pour une variation de temps de retard $\Delta t_R$ égale à des valeurs prédéterminées, et pour lesquelles la courbe de dispersion correspondante présente une erreur de linéarité inférieure à une valeur prédéterminée.

Pour illustrer le rôle des différents paramètres de la ligne à retard selon l'invention sur les valeurs de plage de temps de retard et de fréquences accessibles, la figure 2 montre l'allure d'une telle courbe de dispersion C représentative du temps de retard normalisée Y en fonction de la fréquence normalisée X autour de son point d'inflexion I par rapport à sa tangente T au point d'inflexion. La courbe présente deux asymptotes verticales $X_{\pm I} = \frac{1}{N\sin\theta' \pm 1}$ et a pour équation :

$$Y = \frac{N\sin\theta'}{\sqrt{1 - \left(N\sin\theta' - \frac{1}{X}\right)^2}}\left(\frac{1}{X} - \frac{1}{X_o}\right)$$

avec

$$X_o = \frac{af_o}{pc}$$

Pour une valeur $X_i$ donnée, l'écart e entre la courbe C et sa tangente T au point d'inflexion I caractérise une erreur de linéarité $\delta$ égale à l'écart e rapporté à la valeur $y_i$ de la tangente au point considéré. Une erreur de linéarité maximale $\delta_m$ étant fixée, le choix, dans la limite de la relation (1) des valeurs de l'indice N des prismes utilisés et de l'angle d'attaque $\theta'$ de l'onde incidente conditionnent alors l'amplitude des plages $\frac{2a}{pc}\Delta f$ et $\frac{2c}{d}\Delta t_R$ pour lesquelles la courbe C présente une linéarité inférieure à $\delta_m$.

Le choix de N et de $\theta'$ conditionne également la valeur centrale $X_0 = \frac{af_o}{pc}$ d'après la relation (3), si bien que les valeurs de $\Delta f$ et $f_o$ sont liées par un même rapport (ne dépendant que de $N\sin\theta'$) et sont fixées par le seul choix de la valeur du pas des réseaux utilisés.

L'utilisation d'une source à impulsions de fréquence $f_o$ donnée impose ainsi une valeur au pas des réseaux, ce qui donne la plage maximale $\Delta f$ dans laquelle la source peut être utilisée. Un calcul précis permet d'exprimer cette valeur de bande $\Delta f$ utilisable en fonction de $f_0$, $\theta_0$ et $\delta^*_m$ ($\delta^*_m$ étant une fonction de $\delta_m$ aisément accessible par le calcul) :

$$\Delta f = 4\sin\theta_0 \cdot (\delta^*_m)^{\frac{1}{2}} \cdot f_o$$

D'autre part, la valeur $\frac{c}{d}\Delta t_R$ de la variation du temps de retard normalisé correspondant à la portion de courbe C de linéarité correcte (erreur de linéarité inférieure ou égale à $\delta_m$) permet, par un choix adapté de la valeur de d de déduire une variation de temps de retard maximal de l'impulsion. Un calcul précis permet d'exprimer cette valeur par la relation :

$$\Delta t_R = 4\tan\theta_0 (\delta^*_m)^{\frac{1}{2}} \cdot \frac{d}{c}$$

La ligne à retard selon l'invention s'applique tout particulièrement à la compression/extension d'ondes laser modulées linéairement en fréquence. Les systèmes mettant en application la puissance ou la haute cadence laser utilisent des ondes laser d'impulsions de durée T modulées linéairement dans une bande de fréquence $\Delta f$. Il convient d'abord d'étendre soit la durée T de l'impulsion laser, soit la bande de modulation $\Delta f$, puis de comprimer les ondes laser avec un temps de retard égal à la durée longue de l'impulsion, de sorte que les impulsions laser aient une durée $\frac{1}{\Delta f}$ après compression, soit en appliquant un taux de compression égal à $T.\Delta f$.

L'application de la ligne à retard selon l'invention à la compression d'impulsions laser, de fréquence centrale $f_o$, permet d'utiliser une bande passante $\Delta f$, une durée d'impulsion laser T (et donc un taux de compression T. $\Delta f$) de valeur prédéterminés, pour lesquelles la linéarité de compression est meilleure qu'une valeur $\delta^*_m$ donnée. Ces valeurs en fonction des valeurs des paramètres de la ligne à retard selon l'invention ($\theta_o$, a, d) peuvent s'exprimer simplement à l'aide des relations suivantes :

$$\Delta f = 4\tan^2\theta_o (\delta^*_m)^{1/2} \cdot \frac{pc}{a}$$

$$T = 4\cot\theta_0 (\delta^*_m)^{1/2} \cdot \frac{d}{c}$$

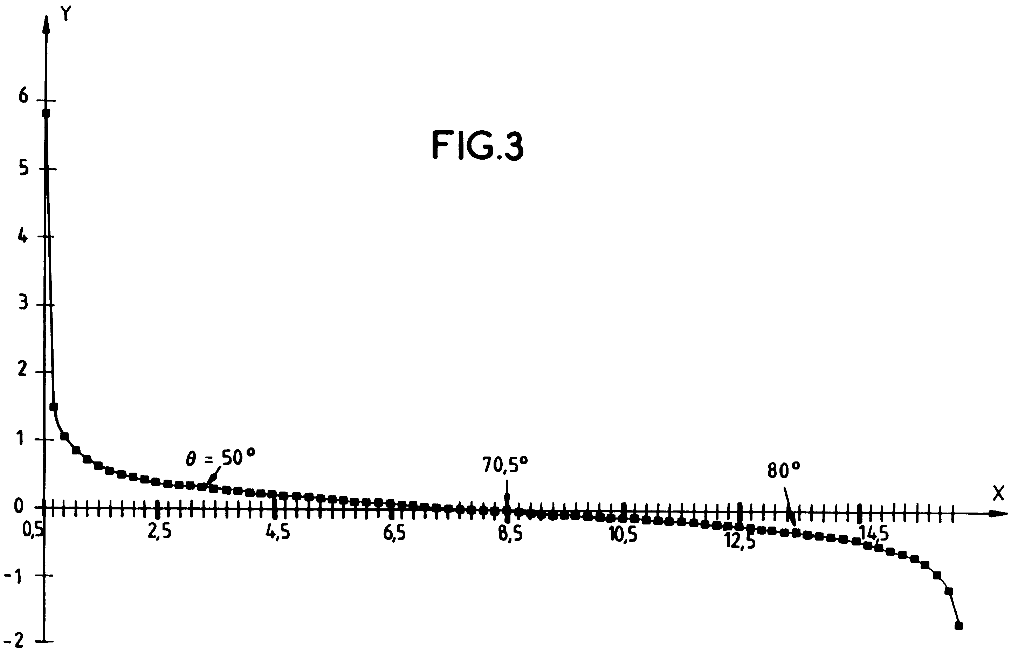

A titre d'exemple, la figure 3 montre la courbe représentative du temps de retard Y en fonction de la fréquence X pour une ligne à retard selon l'invention, utilisant un verre d'indice N égal à 1,5 et un angle d'incidence $\theta'$ (égal à l'angle des prismes), égal à 45°, soit une valeur de $N\sin\theta'$ égale à 1,06. Dans ces conditions, le temps de retard est quasi-linéaire autour d'un anglede diffraction $\theta_0$ égal 70,5° et d'une fréquence normalisée $\frac{af_o}{pc}$ égale 8,5. Sur la figure, ont été également indiqués les points de la courbe correspondant aux angles de diffraction 50° et 80°.

Avec une telle ligne à retard, la distance d entre les réseaux est choisie égale à 6mm pour comprimer quasi-linéairement des impulsions modulées de durée T égale à 2 picosecondes. Avec une valeur adaptée de p égale à 1, le pas des réseaux est choisi égal à 6,86μm pour permettre l'utilisation d'un laser solide titane/saphir, pour lequel la fréquence centrale $f_o$ vaut 3,75 $10^{14}$ hertz. Dans ces conditions, cette ligne à retard fournit un taux de compression $T.\Delta f$ égal à 200 sur une largeur de bande $\Delta f$ égale à $10^{14}$ hertz, permettant une compression des impulsions jusqu'à un temps $\tau$ égal à 10 femtosecondes.

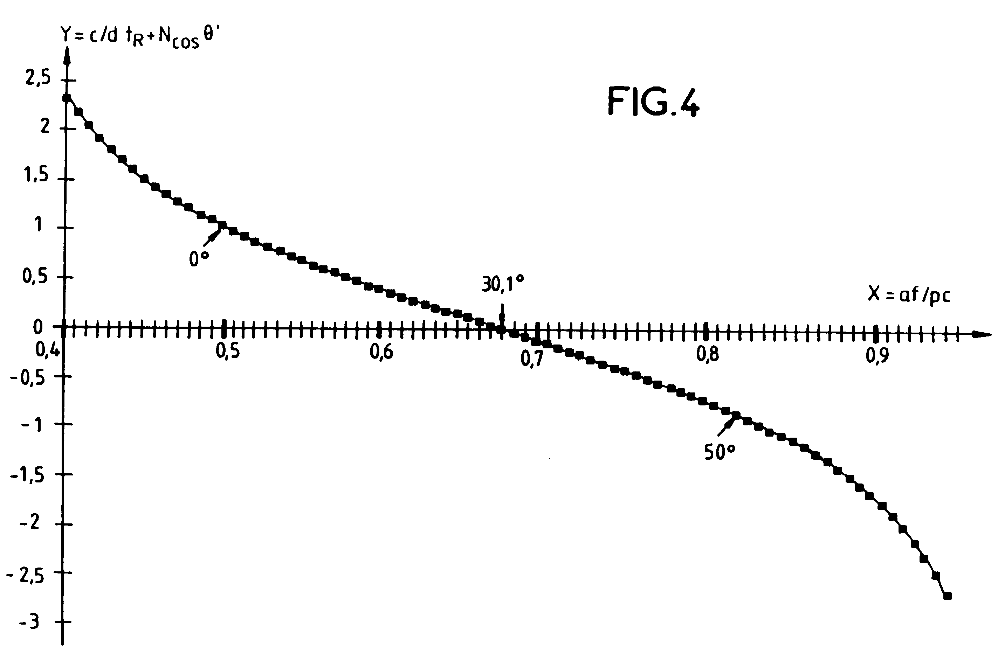

Un autre exemple de courbe de dispersion fournie par une ligne à retard selon l'invention est illustré sur la figure 4. Dans cette ligne à retard, les prismes ont un indice N égal à 2, un angle $\theta'$ (égal à l'angle d'incidence) égal à 85°. La quantité $N\sin\theta'$ étant alors égale à 1,99, le temps de retard est linéaire autour d'un angle $\theta_0$ égal 30,1° et d'une fréquence normalisée $\frac{af_o}{pc}$ égale à 0,67. Sur cette figure, sont également désignés à titre indicatif les points de la courbe correspondant aux angles de diffraction 0° et 50°.

Les paramètres d et a sont alors respectivement choisis égaux à 1 mètre et 0,7μm pour permettre la compression d'impulsions de durée égale à 230 picosecondes délivrées par un laser YAG dopé Nd+3, pour lequel $f_o$ vaut 2,8.$10^{14}$ hertz. Dans ces conditions, cette ligne à retard fournit un taux de compression $T.\Delta f$ égal à 1380. Ainsi, pour une largeur de bande $\Delta f$ égale à 6.$10^{12}$ Hz, les impulsions longues de ce laser peuvent être comprimées jusqu'à un temps $\tau$ égal à 170 femtosecondes.

L'invention n'est pas limitée aux exemples de réalisation décrits et représentés. En particulier, afin d'obtenir des taux de compression encore plus élevés, par exemple de l'ordre de 10000, sans limiter les performances de la compression, c'est-à-dire en restant sur une portion quasi-linéaire de la courbe, il est possible d'aménager le trajet des ondes laser afin de réaliser plusieurs passages dans une ou plusieurs lignes de retard du type décrit. Un tel aménagement peut être réalisé par exemple à l'aide de miroirs positionnés de manière adaptée, ou en disposant plusieurs lignes à retard en cascade.

## Revendications

1. Ligne à retard optique dispersive pour impulsions d'ondes lumineuses modulées autour d'une fréquence centrale $f_o$, comportant un premier (R1) et un second (R2) réseaux optiques avec un pas a, parallèles séparés par une distance d et localisés à la surface d'un matériau d'indice N transparent aux ondes lumineuses, la valeur de N fixant une valeur d'angle de réfraction limite, caractérisée en ce qu'une onde incident ($\Sigma$) est diffractée sous un angle $\theta'$ supérieur à l'angle de réfraction limite par transmission à travers le premier (R1) puis à travers le second (R2) réseau, l'angle $\theta'$ d'incidence du premier et l'angle d'émergence du second réseau étant égal à $\theta'$, et en ce que les valeurs des paramètres N, $\theta'$, a et d sont alors choisies pour qu'une variation prédéterminée de temps de retard $\Delta t_R$ definie par $\Delta t_R = 4\tan\theta_0 (\delta^*_m)^{1/2} \cdot \frac{d}{c}$, avec $\sin\theta_0 = \frac{1}{N\sin\theta'}$ et c étant la vitesse de la lumière dans le vide d'une impulsion, introduit par la double diffraction, corresponde à une valeur prédéterminée d'une largeur de bande de modulation $\Delta f$ definie par $\Delta f = 4 \sin\theta_0 . (\delta^*_m)^{1/2} . f_o$ autour de $f_0$, dans un domaine où la variation de temps de retard en fonction de la fréquence de l'impulsion laser ne s'écarte d'un segment de droite que d'une erreur de linéarité $\delta^*_m$ inférieure à une valeur prédéterminée.

2. Ligne à retard optique dispersive selon la revendication 1, caractérisée en ce que chaque réseau (R1 ; R2) est localisé sur l'une des deux faces (F1, F2; F3, F4) d'un prisme (P1 ; P2), les faces portant les réseaux (F2 ; F3) des prismes (P1 ; P2) étant disposées parallèlement en regard l'une de l'autre, et en ce qu'un rayon incident ($R_i$) d'une onde ($\Sigma$) pénètre dans la ligne à retard normalement par la face non gravée (F1) du premier prisme (P1), et émerge normalement par la face non gravée (F4) du second (P2), les angles des prismes (P1 ; P2) étant égaux à l'angle d'incidence ($\theta'$) de l'onde incidente ($\Sigma$).

3. Utilisation d'une ligne à retard selon l'une des revendications 1 ou 2 pour la compression/extension linéaire d'impulsions d'ondes laser linéairement modulées, caractérisé en ce que l'angle de diffraction sur le premier réseau (R1) étant $\theta_0$ pour une impulsion de fréquence centrale $f_o$, les valeurs des paramètres N, $\theta'$, a et d de la ligne sont choisies de manière à traiter des impulsions modulées sur une largeur de bande $\Delta f$ autour de $f_o$, et de durée T, dans un domaine d'écart de linéarité inférieur à une valeur $\delta^*_m$ prédéterminée, $\Delta f$ et T étant telles que :

EP 0 626 740 B1

$$\Delta f = 4\tan^2\theta_o(\delta^*_m)^{\frac{1}{2}} \cdot \frac{pc}{a}$$

$$T = 4\cot\theta_0(\delta^*_m)^{\frac{1}{2}} \cdot \frac{d}{c}$$

c étant la vitesse de la lumière, et p un entier naturel de valeur adaptée.

## Patentansprüche

1. Dispersive optische Verzögerungsleitung für Lichtwellenimpulse, die um eine Bandmittenfrequenz $f_0$ moduliert sind, mit einem ersten und einem zweiten parallelen optischen Gitter (Rl bzw. R2) mit einer Teilung a, die durch einen Abstand d getrennt sind und an der Oberfläche eines Materials mit dem Index N angeordnet sind, das für Lichtwellen transparent ist, wobei der Wert von N einen Grenzwert für den Brechungswinkel festlegt, dadurch gekennzeichnet, daß eine einfallende Welle ($\Sigma$) unter einem Winkel $\theta'$, der größer als der Grenzbrechungswinkel ist, durch Übertragung über das erste (Rl) und dann über das zweite Gitter (R2) gebeugt wird, wobei der Einfallswinkel des ersten und der Austrittswinkel des zweiten Gitters gleich $\theta'$ ist, und daß die Werte der Parameter N, $\theta'$, a und d dann derart gewählt sind, daß eine vorbestimmte Änderung der Verzögerungszeit $\Delta t_R$ des Impulses, die durch

$$\Delta t_R = 4\tan\theta_0(\delta^*_m)^{1/2} \cdot \frac{d}{c} \qquad \text{mit } \sin\theta_0 = \frac{1}{N\sin\theta'}$$

definiert ist, wobei c die Lichtgeschwindigkeit im Vakuum ist, und durch die Doppelbrechung eingeführt wird, einem vorbestimmten Wert einer Modulationsbandbreite Af entspricht, der durch $\Delta f = 4\sin\theta_0 (\delta^*_m)^{1/2} \cdot f_0$ um $f_0$ in einem Bereich definiert ist, in dem die Änderung der Verzögerungszeit in Abhängigkeit von der Frequenz des Laserimpulses von einem Geradensegment nur um einen Linearitätsfehler $\delta^*_m$ abweicht, der kleiner als ein vorbestimmter Wert ist.

2. Dispersive optische Verzögerungsleitung nach Anspruch 1, dadurch gekennzeichnet, daß jedes Gitter (R1; R2) an einer der beiden Flächen (F1, F2; F3, F4) eines Prismas (P1; P2) angeordnet ist, wobei die die Gitter tragenden Flächen (F2; F3) der Prismen (Pl; P2) einander gegenüber parallel angeordnet sind, und daß ein einfallender Strahl ($R_i$) einer Welle ($\Sigma$) in die Verzögerungsleitung senkrecht zu der ungravierten Fläche (F1) des ersten Prismas (P1) eintritt und senkrecht zu der ungravierten Fläche (F4) des zweiten (P2) austritt, wobei die Winkel der Prismen (P1; P2) gleich dem Einfallswinkel ($\theta'$) der einfallenden Welle ($\Sigma$) sind.

3. Verwendung einer Verzögerungsleitung nach einem der Ansprüche 1 oder 2 zur linearen Kompression/Expansion von linear modulierten Laserwellenimpulsen, dadurch gekennzeichnet, daß dann, wenn der Beugungswinkel an dem ersten Gitter (R1) für einen Impuls mit der Bandmittenfrequenz $f_0$ den Wert $\theta_0$ hat, die Werte der Parameter N, $\theta'$, a und d der Leitung derart gewählt sind, daß Impulse, die über eine Bandbreite Af um $f_0$ moduliert sind und die Dauer T haben, in einem Linearitätsabweichungsbereich verarbeitet werden, der kleiner als ein vorbestimmter Wert $\delta^*_m$ ist, wobei für $\Delta f$ und T gilt:

$$\Delta f = 4 \tan^2 \theta_0 (\delta^*_m)^{1/2} \cdot \frac{pc}{a}$$

$$T = 4 \cot \theta_0 (\delta^*_m)^{1/2} \cdot \frac{d}{c} ;$$

wobei c die Lichtgeschwindigkeit und p eine natürliche ganze Zahl mit angepaßtem Wert ist.

## Claims

1. Dispersive optical delay line for light-wave pulses modulated about a central frequency $f_0$, comprising a first optical grating (Rl) and a second optical grating (R2), with a spacing a, which are parallel, separated by a distance d and located on the surface of a material having an index n which is transparent to the light waves, the value of n determining a critical angle of refraction, characterized in that an incident wave ($\Sigma$) is diffracted at an angle ($\theta'$), which is greater than the critical angle of refraction, by transmission through the first grating (R1) and then through the second grating (R2), the angle of incidence $\theta'$ on the first grating and the angle of emergence from the second grating being equal to $\theta'$, and in that the values of the parameters n, $\theta'$, a and d are then chosen so that a predetermined variation in delay time $\Delta t_R$, defined by $\Delta t_R = 4\tan\theta_0(\delta^*_m) \cdot {}^{\frac{1}{2}}d/c$ with $\sin\theta_0 = 1/n.\sin\theta'$ and c being the velocity of light in vacuo, of a pulse, introduced by the double diffraction, corresponds to a predetermined value of a modulation bandwidth $\Delta f$, defined by $\Delta f = 4\sin\theta_0 (\delta^*_m)^{\frac{1}{2}} \cdot f_0$, about $f_0$ within a range in which the variation in delay time as a function of the frequency of the laser pulse departs from a straight-line segment only by a linearity error $\delta^*_m$ of less than a predetermined value.

2. Dispersive optical delay line according to Claim 1, characterized in that each grating (R1; R2) is located on one of the two faces (Fl, F2; F3, F4) of a prism (P1; P2), those faces of the prisms (P1; P2) that bear the gratings (Fl; F3) being placed so as to be parallel with and facing each other, and in that an incident ray ($R_i$) of a wave ($\Sigma$) enters the delay line at normal incidence via the unetched face (FI) of the first prism (PI) and emerges at normal incidence via the unetched face (F4) of the second prism (P2), the angles of the prisms (PI; P2) being equal to the angle of incidence ($\theta'$) of the incident wave ($\Sigma$).

3. Use of a delay line according to either of Claims 1 and 2 for the linear compression/expansion of linearly modulated laser-wave pulses, characterized in that, the angle of defraction on the first grating (RI) being $_0$ for a pulse at the central frequency $f_0$, the values of the parameters n, $\theta'$, a and d of the line are chosen so as to process pulses which are modulated over a bandwidth $\Delta f$ about $f_0$ and which have a duration T, within a range of linearity error less than a predetermined value $\delta^*_m$, $\Delta f$ and T being such that:

$$\Delta f = 4 \tan^2\theta_0 (\delta^*_m)^{\frac{1}{2}}.pc/a$$

$$T = 4 \cot\theta_0 (\delta^*_m)^{\frac{1}{2}}.d/c$$

c being the velocity of light and p being a natural integer of suitable value.

FIG.1

FIG.2

8

FIG.3

EP 0 626 740 B1

FIG.4

$Y = c/d \ t_R + N_{cos} \theta'$

$X = af/pc$

EP 0 626 740 B1